# EUROPEAN PATENT APPLICATION

(11) **EP 1 903 759 A1**
(43) Date of publication of application: **26.03.2008**
(21) Application number: 07116716.7
(22) Date of filing: 19.09.2007
(51) Int. Cl.: H04M 1/725, H04M 1/73

(54) **Method of controlling display of analog clock and mobile communication terminal using same**

(30) Priority: 19.09.2006 KR 20060090626
(71) Applicant: Samsung Electronics Co., Ltd., Suwon-si, Gyeonggi-do 442-743 (KR)
(72) Inventor: Kim, Jin-Yong, Gyeonggi-do (KR); Jong, In-Won, Gyeonggi-do (KR); Baek, Sung-Hwan, Gyeonggi-do (KR)
(74) Representative: Grünecker, Kinkeldey, Stockmair & Schwanhäusser Anwaltssozietät

(57) **Abstract**

A function of displaying a clock visually varying according to state information which can be provided by a mobile communication terminal is implemented. In particular, an analog clock designed to move three-dimensionally, which is formed by adding a graphical factor to state information, such as remaining power of battery and reception sensitivity, of a mobile communication terminal, is displayed. Accordingly, since an analog clock on which specific state information is reflected can be displayed, various personalities of users can be reflected with simultaneously increasing visibility in information delivery.

## Description

The present invention relates generally to a mobile communication terminal having a variable screen, and in particular, to a method of controlling the contents displayed on a screen according state information of a mobile communication terminal, and a mobile communication terminal using the same.

Recently, the popularization of mobile communication terminals, which can be carried by individuals, has resulted in additional functions being added, and accordingly, mobile communication terminal users can receive various kinds of services besides a conventional phone call function.

Such a mobile communication terminal employs various additional functions in order to increase convenience or efficiency in use. For example, a screen of the mobile communication terminal may display a state of the mobile communication terminal, various kinds of information, interesting images to a user in normal times, or a game execution state.

To accommodate various additional functions, mobile communication terminals tend to have a larger screen displaying more colors. Thus, a screen s of such a mobile communication terminal needs to be more efficient and versatile. In addition, in order to increase an effective value of a screen in a mobile communication terminal and satisfy various demands of users, the screen needs to be connected to various additional functions of the mobile communication terminal.

For example, a screen of a mobile communication terminal can display a moving picture in order to increase an effective value. However, on a screen for providing time information to a user, only a digital or analog clock designed in an icon form is displayed, and even when the digital or analog clock is displayed, the display is performed in a simple and repetitive method, such as a change of digits or a motion of the hour and the minute hands according to a time change. Thus, this clock design merely borrows the function and structure of a general watch.

As described above, existing mobile communication terminals display time information by varying only digits or the hour and the minute hands in a clock design. That is, time display methods of the existing mobile communication terminals, which are designed in a digital or analog form, simply represent only time information. In addition, since standard clock designs are used, they tend to be boring, and the effectiveness of utilization of a variety of colors and an enlarged screen of each mobile communication terminal decreases. Thus, in order to increase an effective value of a screen on which a clock is viewed in mobile communication terminals and satisfy the various demands of users, a method of reflecting various personalities of the users and simultaneously increasing visibility in information delivery is required. In addition, according to the various demands of users, if a clock displayed on a screen can be vividly represented in response to state information of a mobile communication terminal, it will be helpful to satisfy the various demands of users.

The present invention has been designed to substantially solve at least the above problems and/or disadvantages and to provide at least the advantages below. Accordingly, the object of the present invention is to provide a method of controlling display of an analog clock, whereby a user can intuitively view a state of a mobile communication terminal, and a mobile communication terminal using the same.

This object is solved by the subject matter of the independent claims.

Preferred embodiments are defined in the dependent claims.

Another aspect of the present invention is to provide a method of controlling display of an analog clock, whereby information besides clock information can be displayed by means of an analog clock design, and a mobile communication terminal using the same.

According to one aspect of the present invention, there is provided a mobile communication terminal for controlling display of an analog clock, the mobile communication terminal including a memory for storing animation data of the analog clock moving with a predetermined per-minute perspective angle; a controller for reading analog clock animation data from the memory every time a predetermined minute-based time elapses and controlling the analog clock moving with a perspective angle corresponding to a current minute to be displayed using the read analog clock animation data; and a display unit for displaying the analog clock.

According to another aspect of the present invention, there is provided a method of controlling display of an analog clock in a mobile communication terminal, the method including storing animation data of the analog clock moving with a predetermined per-minute perspective angle; reading analog clock animation data from the memory every time a predetermined minute-based time elapses; and displaying the analog clock moving with a perspective angle corresponding to a current minute using the read analog clock animation data.

The above and other aspects, features and advantages of the present invention will become more apparent from the following detailed description when taken in conjunction with the accompanying drawing in which:
FIG. 1 is a block diagram of a mobile communication terminal according to the present invention;
FIG. 2 is a configuration of a controller illustrated in FIG. 1, according to the present invention;
FIG. 3 is a flowchart illustrating a method of displaying an analog clock moving with a perspective angle according to a time change according to the present invention;
FIG. 4 is a flowchart illustrating a method of displaying an analog clock by varying components forming the analog clock according to state information according to the present invention;
FIGs. 5A, 5B and 5C illustrate shapes of an analog clock varying according to Received Signal Strength Indication (RSSI) according to the present invention; and
FIGs. 6A and 6B illustrate colors of an analog clock varying according to remaining power of battery according to an exemplary embodiment of the present invention.

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail for clarity and conciseness.

The present invention implements a function of displaying a clock visually varying according to state information that can be provided by a mobile communication terminal. In particular, in an exemplary embodiment of the present invention, an analog clock designed to move three-dimensionally, which is formed by adding a graphical factor to state information, such as remaining power of battery and reception sensitivity, of a mobile communication terminal, is displayed. According to an exemplary embodiment of the present invention, since an analog clock on which specific state information is reflected can be displayed, various personalities of users can be reflected with simultaneously increasing visibility in information delivery.

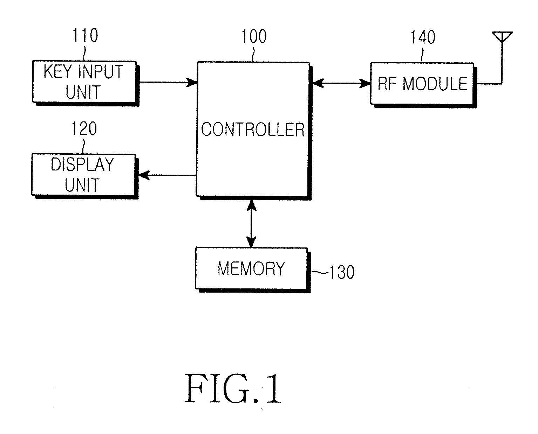

Components and operations of a mobile communication terminal having the function described above will be described with reference to FIG. 1, which is a block diagram of a mobile communication terminal according to an exemplary embodiment of the present invention.

Referring to FIG. 1, the mobile communication terminal includes a controller 100, a key input unit 110, a display unit 120, a memory 130, and a Radio Frequency (RF) module 140.

The controller 100 controls a general operation of the mobile communication terminal, and in particular, controls an operation for showing an effect in which an analog clock moves three-dimensionally by varying a perspective angle of the analog clock according to a position viewing of the minute hand. To do this, the controller 100 reads analog clock animation data from the memory 130 for storing animation data of the analog clock moving with a predetermined per-minute perspective angle, every time a predetermined minute-based time elapses, and controls the analog clock moving with a perspective angle corresponding to a current minute to be displayed using the read analog clock animation data. For example, the controller 100 controls an analog clock of which a perspective angle varies 30° per minute based on a current minute to be displayed.

According to an exemplary embodiment of the present invention, by reflecting remaining power of battery and Received Signal Strength Indication (RSSI) on an analog clock of which a perspective angle varies based on a current minute, a user can intuitively perceive the remaining power of battery and the RSSI by only viewing a shape of the analog clock.

In detail, the controller 100 periodically measures RSSI indicating a level of signal power received from a network and displays the analog clock by varying a shape of the analog clock in correspondence to the measured RSSI. The controller 100 also displays the analog clock by varying a color of the analog clock in correspondence to remaining power of battery.

For example, a case where the RSSI is represented using a circular face of the analog clock will now be described. The RSSI can be represented by dividing the circular face of the analog clock into a plurality of circular arcs having the same length and varying the length of each circular arc according to the RSSI as illustrated in Table 1. In this case, the controller 100 determines the length of each circular arc corresponding to the RSSI in order to display the circular frame of the analog clock having an arc length corresponding to a percentage of the RSSI. Thus, at first, the analog clock is represented as a single circle, and if the RSSI is weaker, the analog clock having the plurality of circular arcs evenly disposed on the clock face, each arc having shorter length, is displayed. That is, each gap between circular arcs is gradually widened when the RSSI gradually decreases. Thus, a user can intuitively perceive that the RSSI is weak if the analog clock has the circular face with wide gaps between circular arcs.

**Table 1**

| Percentage of RSSI (%) | Length of each circular arc |
|---|---|
| 100 | π/6 × radius |
| 80 | (π/6 × radius) × 0.8 |
| 60 | (π/6 × radius) × 0.6 |
| 40 | (π/6 × radius) × 0.4 |
| 20 | (π/6 × radius) × 0.2 |
| 0 | 0 |

A case where remaining power of battery is represented using different colors for the analog clock will now be described. The colors of the analog clock can represent remaining power of battery as illustrated in Table 2. Table 2 illustrates a correlation between a percentage of remaining power of battery and a color of the circular arcs forming the circular face of the analog clock. The controller 100 determines a color of the analog clock with reference to Table 2 in order to display the analog clock having a color corresponding to a percentage of the remaining power of battery. In this case, the remaining power of battery may be represented by varying only a color of a circular arc currently facing the minute hand or a color of all circular arcs of the analog clock.

**Table 2**

| Percentage of remaining power of battery (%) | Color of circular arc |
|---|---|
| 100 | Red |
| 70 | Orange |
| 30 | Yellow |
| 0 | Blue |

Although the case where the length of each circular arc varies according to the RSSI and a color of the analog clock varies according to the remaining power of battery has been described, the state information, such as the RSSI and the remaining power of battery, of the mobile communication terminal can be represented in various methods, such as a method of varying a circular shape of the analog clock to an oval.

The key input unit 110 , includes various keys, such as various function keys, number keys, and special keys (*, #), and provides key input data input by the user to the controller 100. That is, the key input unit 110 outputs key input data dependent to each key selected by the user, and the controller 100 receives the key input data output from the key input unit 110, detects what key was selected, and performs a relevant operation according to the detection result.

The display unit 120 receives display data corresponding to the key input data input from the key input unit 110 and displays the display data, or displays an operational state and a plurality of pieces of information of the mobile communication terminal using icons and characters, under the control of the controller 100. When the user sets or operates a desired function, the controller 100 controls the display unit 120 to allow the user to visually perceive a state of the setting or operation. According to an exemplary embodiment of the present invention, the display unit 120 displays an analog clock of which a perspective angle, a color, and a shape vary according to state information which can be provided by the mobile communication terminal.

The memory 130 includes Read Only Memory (ROM) and Random Access Memory (RAM) for storing a plurality of programs and data. The memory 130 stores animation data of an analog clock moving with a predetermined perspective angle according to a time change. That is, the memory 130 stores animation data of an analog clock moving with a predetermined per-minute perspective angle. The memory 130 also stores data of analog clock display items corresponding to state information, such as RSSI and remaining power of battery, of the mobile communication terminal.

The RF module 140 is connected to the controller 100, converts voice data and control data to an RF signal and transmits the converted RF signal, and receives an RF signal and converts the received RF signal to voice data and control data.

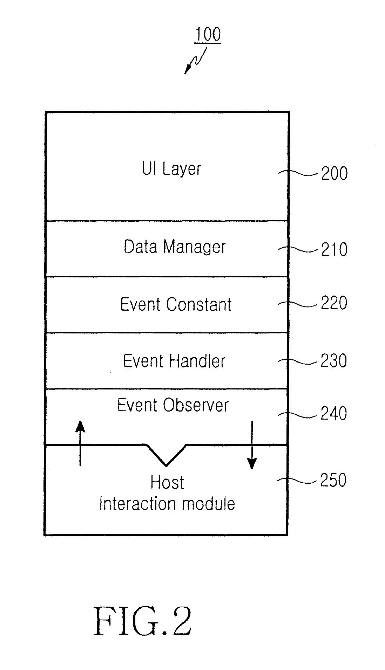

Among the components of the mobile communication terminal, the controller 100 controlling an analog clock varying according to a time change and a change of state information of the mobile communication terminal to be displayed has a configuration illustrated in FIG. 2. FIG. 2 is a configuration of the controller 100 illustrated in FIG. 1, according to an exemplary embodiment of the present invention.

Referring to FIG. 2, a host interaction module 250 collects and manages various kinds of information, combines an event and the various kinds of information, and transmits the combined result to a User Interface (UI) layer 200. The UI layer 200 includes a data manager 210, an event constant 220, an event handler 230, and an event observer 240. The UI layer 200 displays an analog clock in which perspective angle information of the analog clock and state information of the mobile communication terminal are mixed, the analog clock being designed in advance to increase user readability.

The host interaction module 250 detects state information, such as RSSI and remaining power of battery, of the mobile communication terminal and transmits the detected state information to the data manager 210 via the layers existing below the UI layer 200. The event observer 240 detects a current time and transmits a timer event for displaying a motion of the hour and minute hands of the analog clock to the event handler 230 in order to display the detected current time. The event handler 230 transmits information on how components on a screen for forming the analog clock are changed according to the timer event to the event constant 220. The event constant 220 transmits information on the components forming the analog clock according to the timer event to the data manager 210.

The data manager 210 forms the analog clock based on the component information according to the timer event in order to control the analog clock to move according to a time change so that the analog clock is displayed by the UI layer 200. The data manager 210 also reflects the state information of the mobile communication terminal on the components forming the analog clock. Thus, the UI layer displays the analog clock of which a perspective angle varies according to a time change and simultaneously the length and color of each circular arc forming the analog clock vary according to the state information. The perspective angle of the analog clock varies so that a circular arc currently facing the minute hand or a second hand can be well visible to the user.

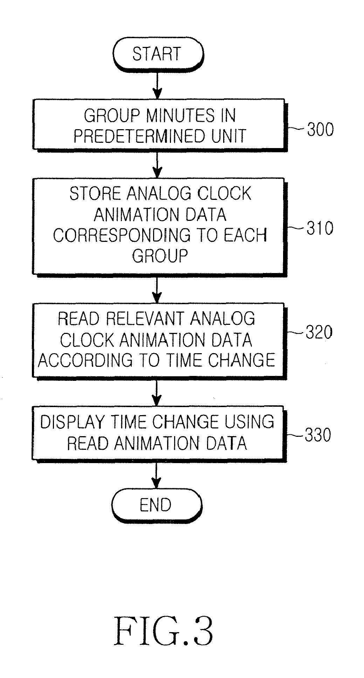

A method of implementing an analog clock animation of which a perspective angle of an analog clock varies according to a time change by applying the principle of the present invention described above to the mobile communication terminal will now be described. That is, a method of displaying an analog clock moving with a perspective angle according to a time change will now be described with reference to FIG. 3.

FIG. 3 illustrates a process of displaying an analog clock in order to display a current time by varying a perspective angle so that a user can well view the analog clock in a position of the minute hand. Minutes are grouped in a predetermined unit in step 300. It is determined based on the grouping whether the analog clock is displayed by varying a perspective angle every minute or every group. Analog clock animation data corresponding to each group is stored in step 310, wherein the analog clock animation data is data to display the analog clock moving with a perspective angle of 30° per minute. The grouping may be set in advance by a manufacturer when the mobile communication terminal is manufactured and can be changed by the user. In order to display a current time in a state where the analog clock animation data corresponding to each group has been stored, the mobile communication terminal reads relevant analog clock animation data from among the analog clock animation data pre-stored according to a time change in step 320.

The mobile communication terminal displays a flow of time using the read analog clock animation data in step 330. In detail, when the analog clock is set to move every minute, the analog clock moves three-dimensionally with a perspective angle corresponding to 30° per minute according to the timer event. In this case, the minute hand directs a number corresponding to a current minute according to the timer event. Likewise, when the analog clock is set to move every five minutes, e.g., when the minute hand reaches a five-minute position from a four-minute position, analog clock animation data of which a perspective angle is adjusted to emphasize the five-minute position is read. That is, in order to emphasize and view a current minute position every five minutes, a perspective angle of the analog clock is changed and displayed. Thus, since the perspective angle of the analog clock is changed based on a current position of the minute hand, the analog clock is viewed as if the analog clock moves three-dimensionally. In this case, since the motion of the hour and minute hands of the analog clock indicating a current time follows a conventional method of displaying an analog clock, the detailed description is omitted.

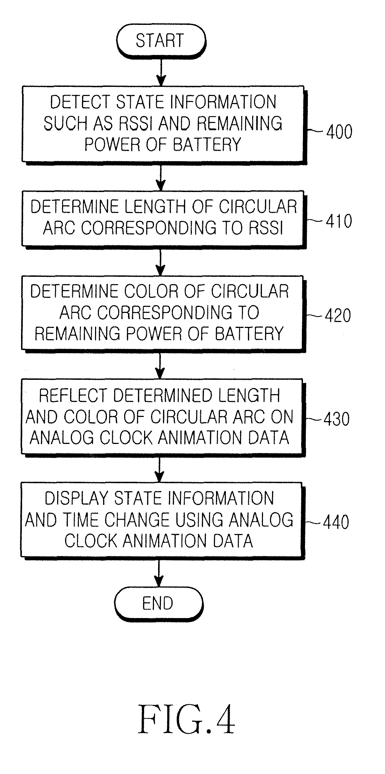

A process of displaying an analog clock by reflecting state information of the mobile communication terminal on the analog clock of which a perspective angle varies according to a time change will now be described. FIG. 4 is a flowchart illustrating a method of displaying an analog clock by varying components forming the analog clock according to state information.

Referring to FIG. 4, the mobile communication terminal detects state information, such as RSSI and remaining power of battery, in step 400. Since the process of detecting state information is the same as a conventional process of detecting state information, the detailed description is omitted. After detecting the state information, the mobile communication terminal determines the length of each circular arc corresponding to the state information in step 410. The mobile communication terminal can determine the length of each circular arc corresponding to current state information by referring to Table 1. In step 420, the mobile communication terminal can determine a color of a circular arc corresponding to current remaining power of battery by referring to Table 2. After determining the length and color of each circular arc, the mobile communication terminal reflects the determined length and color on analog clock animation data in step 430. The mobile communication terminal represents its state information and a time change by varying a shape, a perspective angle, and a color of the analog clock using the analog clock animation data in step 440.

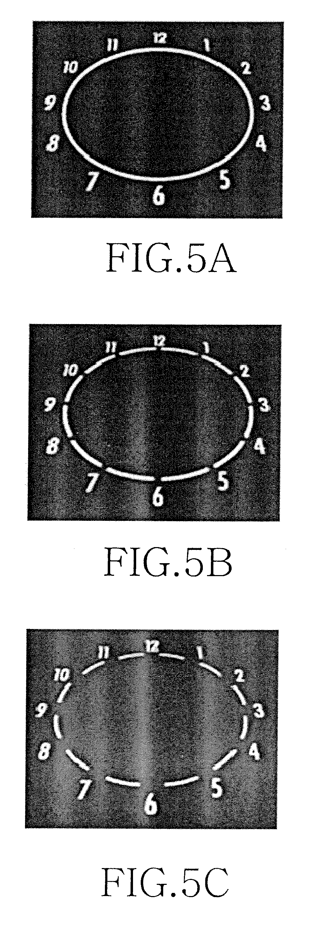

FIGs. 5A-5C illustrate shapes of an analog clock varying according to RSSI. FIG. 5A illustrates a shape of the analog clock when the RSSI is very strong, showing a case where a circular face of the analog clock is drawn with a single solid line. FIGs. 5B and 5C show cases where the length of each circular arc obtained by dividing the circular frame of the analog clock into a plurality of circular arcs having the same length is gradually shorter according to a decrease of the RSSI. As illustrated in FIGs. 5A-5C, a user can intuitively perceive a level of the RSSI by viewing the length of each circular arc.

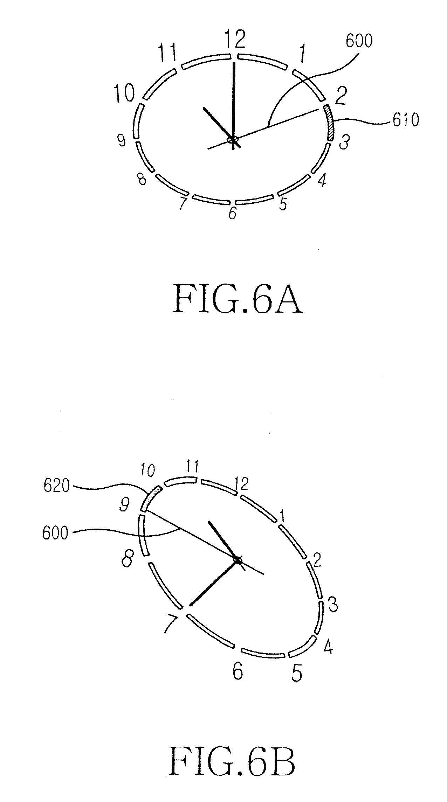

FIG. 6A and 6B illustrate colors of an analog clock varying according to remaining power of battery. FIG. 6A illustrates an analog clock of which a color varies according to remaining power of battery, showing a case where a color of a circular arc 610 corresponding to a current second position 600 is displayed as a color corresponding to the remaining power of battery. For example, if a color of a circular arc facing the second hand 600 is displayed as blue, it indicates that the remaining power of battery is almost nothing, and if a color of a circular arc 620 facing the second hand 600 is displayed as red, it indicates that the remaining power of battery is almost full. Here, only a circular arc currently facing the second hand can be represented with a color corresponding to remaining power of battery, and alternatively, a color of the entire analog clock may be changed to represent remaining power of battery.

Although the cases where state information is represented with the length and color of each circular arc are respectively illustrated in FIGs. 5A-5C and 6A-6B, they are only exemplary embodiments and are not limited thereto. That is, various analog clock animation effects can be provided according to selections of a user, a service provider, or a terminal manufacturer. In addition, the analog clock animation effects according to the exemplary embodiments of the present invention can be created by the user, or received as a kind of content from a content provider and modified by the user.

As described above, according to the present invention, by applying a very dynamic and high-class animation scheme to an analog clock, a user can intuitively perceive a state of a mobile communication terminal, and mobile communication terminals can meet various personalities and tastes of users.

While the invention has been shown and described with reference to a certain preferred embodiment thereof, it will be understood by those skilled in the art that various changes in form and details may be made therein without departing from the scope of the invention as defined by the appended claims.

## Claims

1. A mobile communication terminal for controlling display of an analog clock, the mobile communication terminal comprising:
a memory for storing animation data of the analog clock moving with a predetermined per-minute perspective angle;
a controller for reading analog clock animation data from the memory every time a predetermined minute-based time elapses and controlling the analog clock moving with a perspective angle corresponding to a current minute to be displayed using the read analog clock animation data; and
a display unit for displaying the analog clock.

2. The mobile communication terminal of claim 1, wherein the controller controls the analog clock to be displayed on the display unit by varying a form of the analog clock according to Received Signal Strength Indication, RSSI, of the mobile communication terminal.

3. The mobile communication terminal of claim 1, wherein the controller controls the analog clock to be displayed on the display unit by varying a color of the analog clock according to remaining power of battery of the mobile communication terminal.

4. The mobile communication terminal of one of claims 1 to 3, wherein the memory stores a length table in which a length of each circular arc obtained by evenly dividing a circular face of the analog clock into a plurality of circular arcs corresponds to RSSI of the mobile communication terminal.

5. The mobile communication terminal of claim 4, wherein the length decreases when the RSSI of the mobile communication terminal decreases, by referring to the length table.

6. The mobile communication terminal of one of claims 1 to 3, wherein the memory stores a color table in which a color of a circular arc obtained by evenly dividing a circular face of the analog clock into a plurality of circular arcs corresponds to remaining power of battery of the mobile communication terminal.

7. The mobile communication terminal of claim 6, wherein the color corresponds to remaining power of battery of the mobile communication terminal by referring to the color table.

8. A method of controlling display of an analog clock in a mobile communication terminal, the method comprising:
storing in a memory animation data of the analog clock moving with a predetermined per-minute perspective angle;
reading analog clock animation data from the memory every time a predetermined minute-based time elapses; and
displaying the analog clock moving with a perspective angle corresponding to a current minute position using the read analog clock animation data.

9. The method of claim 8, further comprising:
detecting Received Signal Strength Indication, RSSI, of the mobile communication terminal; and
displaying the analog clock of which a length of each circular arc obtained by evenly dividing a circular face of the analog clock into a plurality of circular arcs varies according to the RSSI.

10. The method of claim 8, further comprising:
detecting remaining power of battery of the mobile communication terminal; and
displaying the analog clock by varying a color of the analog clock according to the remaining power of battery.

11. The method of claim 8, further comprising:
detecting state information of the mobile communication terminal; and
displaying the analog clock by varying a shape of the analog clock moving with a respective angle corresponding to a current minute position according to the state information.

12. The method of claim 11, wherein a perspective angle having a circular shape of the analog clock varies according to the current minute position.

13. The method of claim 11, wherein the state information is represented in a method of varying a circular shape of the analog clock to an oval.
